# DEMANDE DE BREVET EUROPEEN

(11) **EP 0 950 906 A1**
(43) Date de publication de la demande: **20.10.1999**
(21) Numéro de dépôt: 99400921.5
(22) Date de dépôt: 15.04.1999
(51) Int. Cl.: G02B 6/30, G02B 6/42

(54) **Procédé d'assemblage d'un module optique**

(30) Priorité: 16.04.1998 FR 9804745
(71) Demandeur: ALCATEL, 75008 Paris (FR)
(72) Inventeur: Artigue, Claude, 92340 Bourg La Reine (FR); Mallecot, Franck, 92120 Montrouge (FR); Tregoat, Denis, 91190 Gif sur Yvette (FR); Ambrosy, Anton, 75233 Tiefenbron (DE)
(74) Mandataire: Fournier, Michel Robert Marie

(57) **Abrégé**

L'invention se rapporte à un procédé d'assemblage d'un module optique comprenant au moins deux composants optiques (30 et 6) dont les guides d'onde (3 et 7) sont optiquement couplés l'un à l'autre. Le positionnement d'un guide d'onde (3) par rapport à l'autre (7) utilise deux surfaces de contact (8 et 9) prévues respectivement sur chaque composant optique (30 et 6) et coopérant entre elles. Le procédé d'assemblage selon l'invention est plus particulièrement caractérisé en ce qu'une première surface de contact (8) comporte un plan d'appui vertical (8a) placé dans le même plan horizontal que l'axe optique (A3) du guide d'onde (3) de l'un des composants optiques, et en ce qu'une deuxième surface de contact (9) comporte un plan d'appui vertical (9a) placé dans le même plan horizontal que l'axe optique (A7) du guide d'onde (7) de l'autre composant optique.

## Description

La présente invention se rapporte à un procédé d'assemblage d'un module optique. Un module optique est défini comme étant un élément comprenant au moins deux composants optiques, comportant chacun un guide d'onde, les deux composants optiques étant couplés optiquement l'un à l'autre. Plusieurs fibres optiques peuvent par ailleurs être raccordées à un tel module optique.

Des modules optiques ont déjà été réalisés dans l'art antérieur. Un des problèmes principaux qu'il faut résoudre lors de l'assemblage de ces modules est l'alignement des guides d'onde des différents composants optiques pour permettre un couplage optique de bonne qualité.

Les guides d'onde des composants optiques présentent de très petites dimensions. Ainsi par exemple, un composant laser ayant une épaisseur de 100 *µ*m, une longueur de 500 *µ*m et une largeur de 250 *µ*m possède un guide d'onde, noyé dans sa structure, qui peut présenter des dimensions par exemple de l'ordre de 0,2 *µ*m d'épaisseur, de 2 *µ*m de largeur et de 500 *µ*m de longueur. Un tel guide doit en outre être aligné avec un autre guide d'onde dont la section présente également de petites dimensions, par exemple de l'ordre de 10 *µ*m² voire inférieures. La difficulté consiste donc à aligner de tels guides d'onde, de faibles dimensions, surtout lorsqu'ils sont entourés par des composants optiques relativement encombrants.

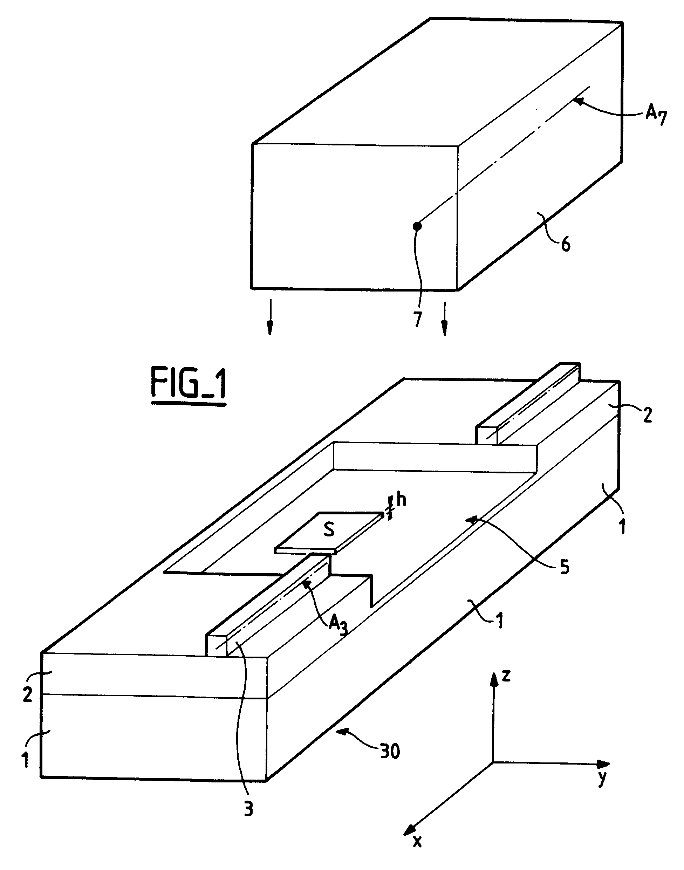

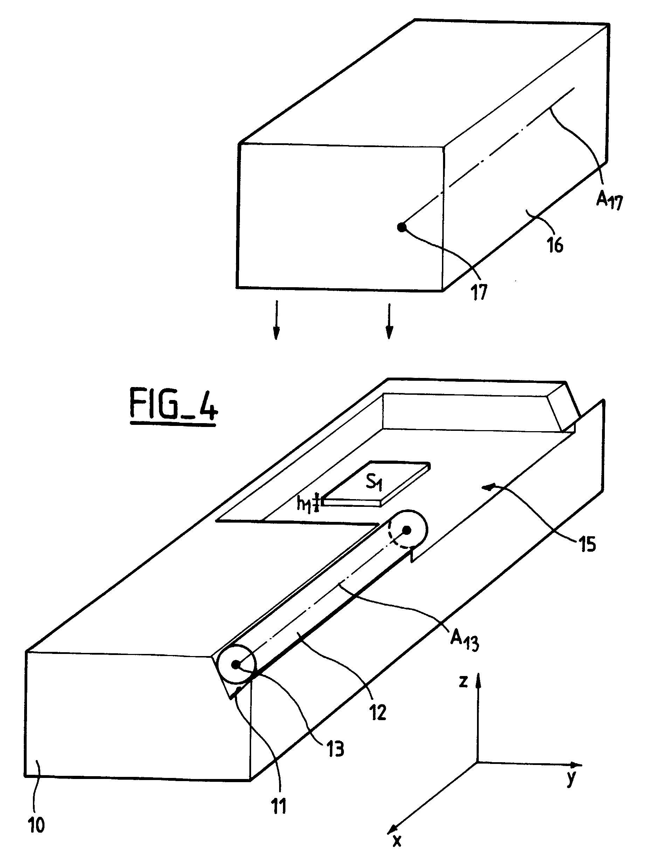

En général, les modules optiques sont réalisés soit sur une structure support en silicium, notée Si, soit sur une structure support en silice sur silicium, notée SiO₂/Si. Les figures 1 à 3B schématisent un module optique classique, selon différents modes de réalisation, formé sur une structure SiO₂/Si, tandis que les figures 4 à 6B schématisent un module optique classique, selon différents modes de réalisation, formé sur une structure Si.

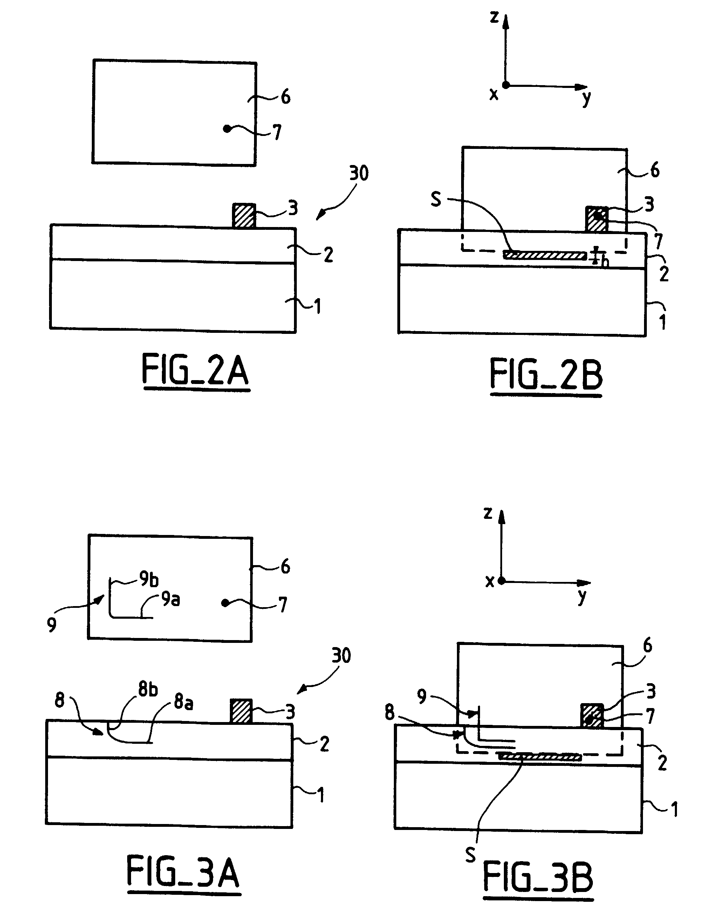

La figure 1 représente un schéma en perspective d'un module optique classique sous forme éclatée et les figures 2A et 2B schématisent la face avant de deux composants optiques respectivement séparés puis assemblés dans le module optique de la figure 1. Le module est réalisé sur une structure support en SiO₂/Si comportant un substrat en silicium 1 sur lequel sont empilées deux couches de silice 2, 3. La deuxième couche de silice 3 est gravée selon une forme particulière, par exemple sous la forme d'une poutre, et constitue un guide de lumière d'un premier composant optique 30 intégré dans la structure.

Une tranchée 5 est définie dans les couches de silice 2, 3 et à proximité du substrat 1, afin d'y loger un deuxième composant optique 6 comportant un guide d'onde 7. Le deuxième composant optique peut par exemple être un laser ou un amplificateur, ou un photodétecteur ou tout autre composant actif ou passif. Il est placé dans la tranchée 5 et fixé au substrat 1, dans le fond de la tranchée, au moyen d'un point de soudure S. Il est disposé de telle sorte que l'axe optique A7 de son guide d'onde 7 soit aligné avec l'axe optique A3 du guide d'onde 3 du premier composant optique 30.

La lumière est émise perpendiculairement à la face avant du module, selon l'axe référencé x sur les figures. Le deuxième composant optique 6 est disposé dans la tranchée 5 de telle sorte que les axes optiques des guides d'onde 3 et 7 s'alignent verticalement et horizontalement, respectivement selon les axes référencés z et y.

Pour réaliser cet alignement des guides d'onde 3 et 7, une manière courante consiste à contrôler la hauteur h du point de soudure S. Or un tel contrôle est très difficile à mettre en oeuvre. Par conséquent, cette méthode ne permet de faire qu'un contrôle approximatif de la hauteur du guide d'onde 7 du deuxième composant optique 6 par rapport au guide d'onde 3 du premier composant optique 30. De plus, cette méthode ne permet pas de contrôler facilement l'alignement transversal, c'est à dire selon l'axe y, des guides d'onde. Cet alignement transversal doit donc être réalisé à l'oeil nu, soit optiquement (l'alignement est lent pour les précisions recherchées), soit par refusion de soudure (faible précision, de l'ordre de 3 *µ*m).

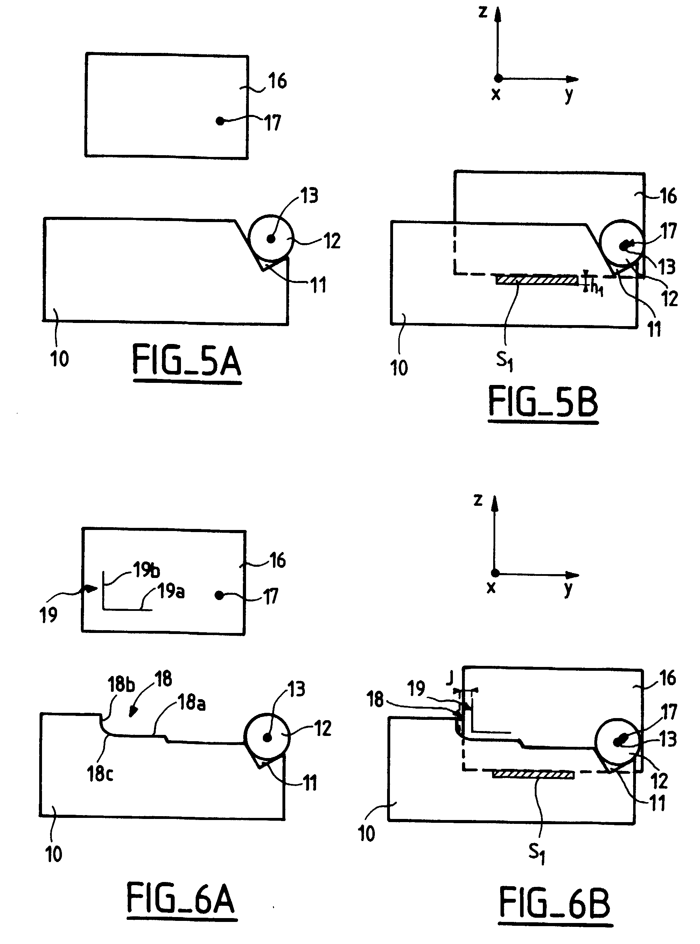

Cette méthode d'assemblage par un contrôle de la hauteur hl du point de soudure Sl entre les deux composants optiques a également été utilisée dans le cas de modules réalisés sur des structures Si et tels que représentés sur les figures 4, 5A et 5B. La figure 4 représente un schéma en perspective d'un tel module sous forme éclatée, tandis que les figures 5A et 5B schématisent la face avant des deux composants optiques, respectivement séparés puis assemblés dans le module de la figure 4. Le module est réalisé sur un substrat en silicium 10 dans lequel est pratiquée une rainure 11 en forme de V, par gravure chimique, pour y loger une fibre optique 12. Cette fibre optique 12 comporte un coeur 13, ou guide de lumière, et forme le premier composant optique du module. Une tranchée 15 est pratiquée dans le substrat en Si 10 afin d'y placer le deuxième composant optique 16 comportant un guide d'onde 17.

Une autre solution a encore été envisagée pour améliorer la qualité de l'alignement des guides d'onde et notamment pour permettre un alignement transversal, selon l'axe y. Cette solution est schématisée sur les figures 3A, 3B et 5A, 5B correspondant respectivement au module optique réalisé sur une structure SiO₂/Si et au module optique réalisé sur une structure Si.

Cette solution consiste à prévoir une première surface de contact 8(18) dans la tranchée de la structure SiO₂/Si (Si) et une deuxième surface de contact 9 (19) sur le deuxième composant optique 6 (16), la deuxième surface de contact 9 (19) étant destinée à coopérer avec la première surface de contact 8(18). Dans ce cas, l'alignement n'est plus défini par la hauteur du point de soudure, qui peut donc être moins précise. En effet, les surfaces de contact définissent des plans d'appui respectivement vertical 8a(18a), 9a (19a), selon l'axe z, et latéral 8b(18b), 9b (19b), selon l'axe y et c'est la position de ces plans d'appui qui permet de contrôler la position des guides d'ondes l'un par rapport à l'autre. Cette surface de contact 8 est gravée, par lithographie, dans la première couche de silice 2 de la structure support SiO₂/Si, après avoir gravé le guide 3 sous forme de poutre.

Comme représenté sur les figures 3A, 3B et 6A, 6B, on place le deuxième composant optique 6 (16) dans la tranchée du support SiO₂/Si (Si), de telle sorte que sa surface de contact 9 (19) vienne se caler contre la surface de contact 8(18) de la structure support SiO₂/Si (Si). La position de la surface de contact 8(18) de la structure support SiO₂/Si (Si) est ajustée de manière à permettre un alignement transversal, selon l'axe y, et vertical, selon l'axe z, des guides d'onde 3(13) et 7 (17).

En ce qui concerne la structure SiO₂/Si, la surface est en général définie au niveau de la couche 2 à proximité du substrat en silicium 1.

Cette deuxième solution ne permet pas de définir universellement la hauteur de la gravure. En effet, la position du plan d'appui vertical 8a(18a) de la structure support doit être définie lors de l'assemblage du module, en fonction de la position du guide d'onde 7 (17) par rapport à la surface inférieure du deuxième composant Optique 6 (16). La hauteur du guide d'onde 7 (17) dans le deuxième composant optique dépendant de la nature de ce composant, Il apparaît donc difficile de contrôler précisément l'alignement vertical, selon l'axe z, des guides d'onde 3, 7 de deux composants optiques.

Cette solution de l'art antérieur ne permet donc pas, sauf imposer des contraintes pénalisantes quant aux dimensions transverses des composants optiques, d'aligner plusieurs composants optiques sur une même structure; cela impliquerait en effet plusieurs gravures successives, dans la structure support, pour définir des surfaces de contact à différentes hauteurs selon la position du guide d'onde de chaque composant.

D'autre part, l'alignement est d'autant plus difficile à contrôler que la taille des guides d'onde est réduite. Par conséquent, les procédés d'assemblage de l'art antérieur ne permettent pas de réaliser un alignement vertical précis des guides d'onde des différents composant optiques, et obligent en outre les fabricants des structures support à adapter leurs produits selon les types de composants optiques qui y seront insérés.

L'invention permet de résoudre ces problèmes d'alignement puisqu'elle propose un procédé d'assemblage dans lequel la position du point d'appui vertical de chaque composant optique est définie par rapport à la position de l'axe optique de son guide d'onde.

L'invention se rapporte plus particulièrement à un procédé d'assemblage d'un module optique comprenant au moins un premier et un deuxième composant optique ayant respectivement un premier et un deuxième guide d'onde, lesdits premier et deuxième guides d'onde étant optiquement couplés l'un à l'autre, le positionnement dudit premier guide d'onde par rapport audit deuxième guide d'onde utilisant une première et une deuxième surface de contact prévues respectivement sur le premier et le deuxième composant optique, ladite première surface de contact coopérant avec ladite deuxième surface de contact, caractérisé en ce que ladite première surface de contact comporte un plan d'appui vertical placé dans le même plan horizontal que l'axe optique du premier guide d'onde, et en ce que ladite deuxième surface de contact comporte un plan d'appui vertical placé dans le même plan horizontal que l'axe optique du deuxième guide d'onde.

Le procédé d'assemblage selon l'invention permet d'aligner, sur une même structure support, les guides d'onde de plusieurs composants optiques de nature différente et dont la taille et l'emplacement varient d'un composant à l'autre. Le procédé est en effet indépendant de la position et de la taille des guides d'ondes dans les différents composants optiques.

D'autres particularités et avantages de l'invention apparaîtront à la lecture de la description donnée à titre d'exemple illustratif et non limitatif et faite en référence aux figures annexées qui représentent :
- la figure 1, déjà décrite, un schéma en perspective éclatée d'un module optique classique, réalisé sur une structure SiO₂/Si,
- les figures 2A et 2B, déjà décrites, des schémas de la face avant de deux composants optiques respectivement séparés et assemblés dans le module de la figure 1,
- les figures 3A et 3B, déjà décrites, des schémas de la face avant de deux composants optiques respectivement séparés et assemblés dans un autre module optique classique réalisé sur une structure SiO₂/Si,
- la figure 4, déjà décrite, un schéma en perspective éclatée d'un module optique classique sur une structure Si,
- les figures 5A et 5B, déjà décrites, des schémas de la face avant des deux composants optiques respectivement séparés et assemblés dans le module optique de la figure 4,
- les figures 6A et 6B, déjà décrites, des schémas de la face avant des deux composants optiques respectivement séparés et assemblés dans un autre module optique classique réalisé sur une structure Si,
- les figures 7A et 7B, des schémas de la face avant de deux composants optiques respectivement séparés et assemblés dans un module optique selon l'invention,
- la figure 8, un schéma en perspective éclatée du module des figures 7A et 7B,
- les figures 9A à 9D, des schémas de la face avant de la structure support du module de la figure 8 au cours de différentes étapes de fabrication,
- les figures 10A et 10B, des schémas de la face avant de deux composants optiques respectivement séparés et assemblés dans un module optique selon une variante de réalisation,
- les figures 11A à 11D, des schémas de la face avant de la structure support du module des figures 10A et 10B au cours de différentes étapes de fabrication,
- les figures 12A et 12B, des schémas de la face avant de deux composants optiques respectivement séparés et assemblés dans un autre module optique selon l'invention,
- la figure 13, un schéma en perspective éclatée du module des figures 12A et 12B.

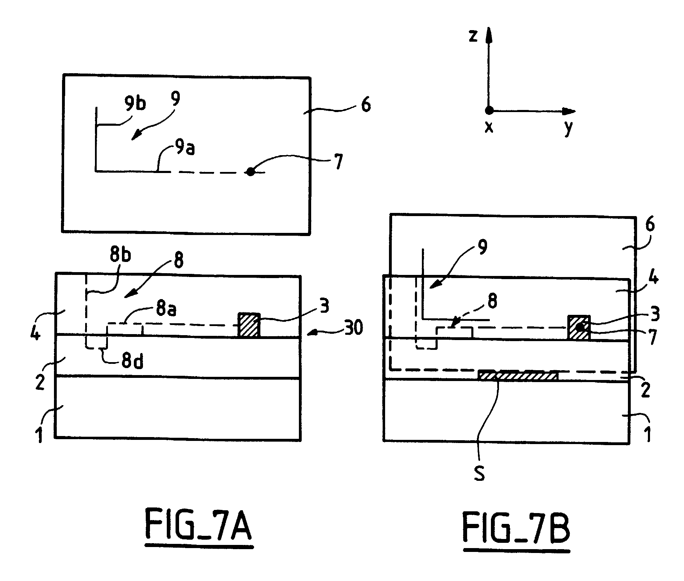

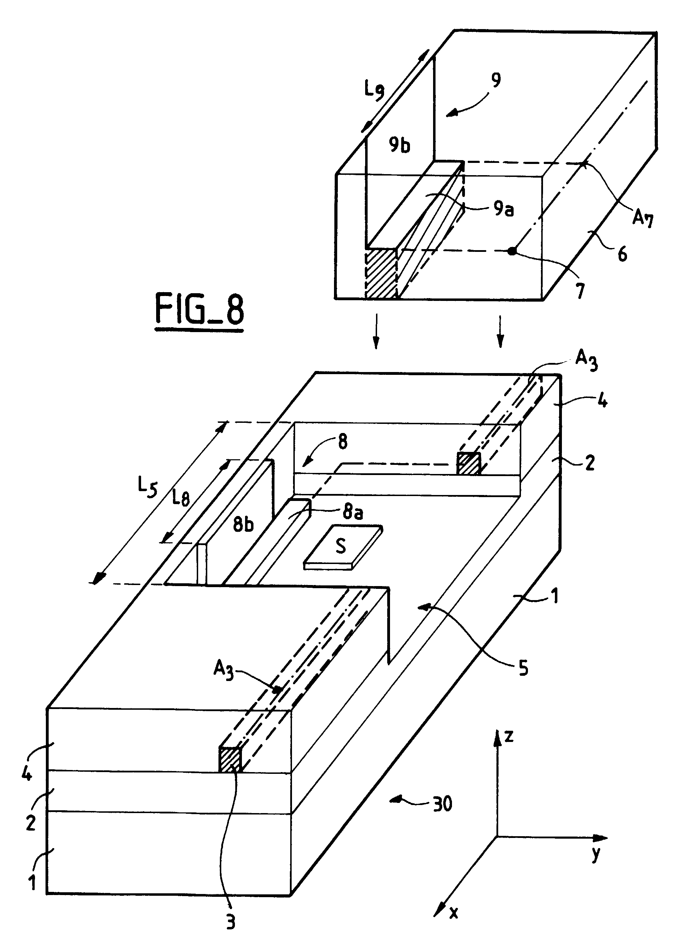

Les figures 7A et 7B schématisent la face avant de deux composants optiques respectivement séparés et assemblés dans un module selon l'invention. Le même module optique est par ailleurs schématisé en perspective et sous forme éclatée sur la figure 8. Dans cet exemple, seulement deux. composants optiques ont été représentés mais un module selon l'invention peut en comporter bien plus que deux. Le module optique représenté sur ces figures 7A et 7B est réalisé sur une structure SiO₂/Si. Un premier composant optique 30 comprenant un ruban actif, ou guide d'onde 3, enterré dans une couche de gaine 4, est intégré dans cette structure support. Les mêmes références que pour les figures 1 à 3B sont utilisées pour désigner les mêmes éléments.

Dans ce module, les surfaces de contact de chaque élément sont définies par rapport à l'axe optique de chaque guide d'onde afin de permettre un alignement fiable et très précis des guides. Ainsi, la surface de contact 8 du premier composant optique 30 est réalisée de telle sorte que son plan d'appui vertical 8a se projette à mi-hauteur de l'épaisseur du guide de lumière 3, c'est à dire de telle sorte que son plan d'appui vertical se situe dans le même plan horizontal que l'axe optique A3 du guide d'onde 3.

De même, le plan d'appui vertical 9a de la surface de contact 9 du deuxième composant optique 6, est défini de telle sorte qu'il se situe dans le même plan que l'axe optique A7 du guide d'onde 7.

Dans ce cas, lorsque la surface de contact 9, et notamment le plan d'appui vertical 9a du deuxième composant optique 6 se superpose au plan d'appui vertical 8a défini dans la structure SiO₂/Si, les axes optiques A3, A7 des deux guides d'onde 3 et 7 sont parfaitement alignés en hauteur.

Le point de soudure S, situé sur le substrat et dans le fond de la tranchée 5 de la structure SiO₂/Si, n'a donc plus qu'une fonction d'attache du deuxième composant optique 6 et sa hauteur n'a pas besoin d'être contrôlée pour régler l'alignement vertical des guides d'onde 3 et 7.

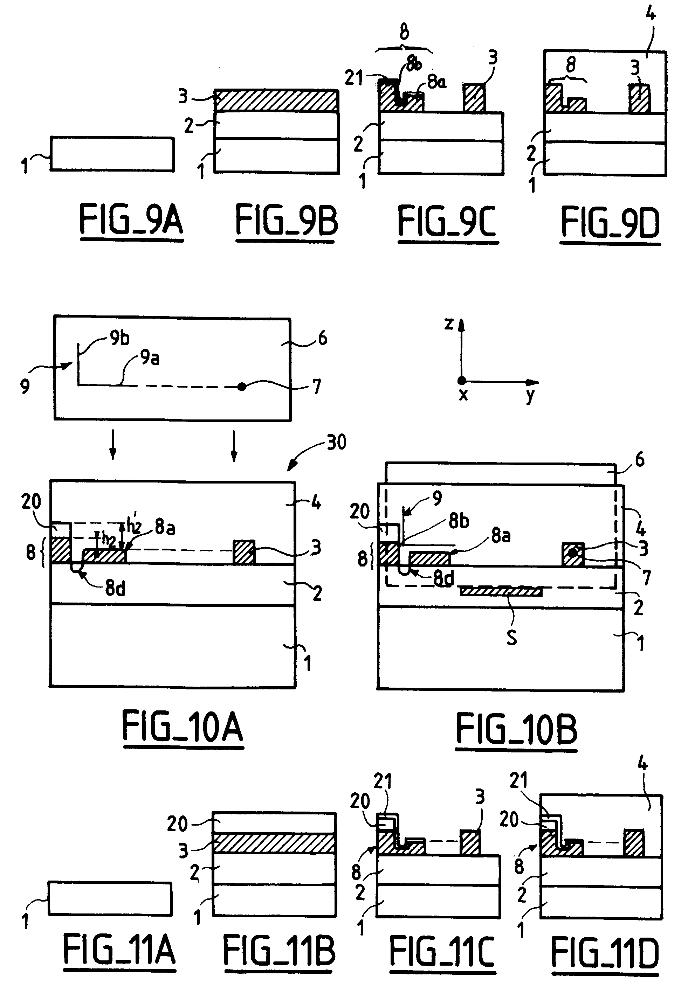

Pour ce qui est de l'alignement transversal, selon l'axe y, la position du plan d'appui correspondant est définie au moment de la gravure de la surface de contact qui est réalisée simultanément à celle du guide d'onde, au moyen d'un seul masque, par la méthode bien connue d'auto-alignement. Ce procédé est décrit plus en détails dans ce qui suit, au regard des figures 9A à 9D.

La première surface de contact 8 du premier composant optique 30 est prévue dans la tranchée 5 de la structure SiO₂/Si. Cette surface de contact 8 a une longueur L8 inférieure ou égale à celle L5 de la tranchée 5. En outre, le deuxième composant optique 6 est évidé dans une partie inférieure représentée en traits hachurés sur la figure 8, afin de définir une surface de contact 9, comportant un plan d'appui vertical 9a et un plan d'appui latéral 9b, dont la longueur L9 recouvre partiellement la longueur L8 de la surface de contact 8 définie sur la structure support SiO₂/Si. La surface de contact 9 est représentée, sur la figure 8, en traits noirs épais. Elle est réalisée de telle sorte que le plan d'appui vertical 9a soit placé dans le même plan que l'axe optique A7 du guide d'onde 7.

Ainsi, lorsque l'on fixe le deuxième composant optique 6 dans la tranchée 5 de la structure SiO₂/Si, la surface de contact 9 coopère avec la surface de contact 8 de la structure SiO₂/Si. Les plans d'appui verticaux 8a et 9a se superposent si bien que l'axe optique A7 du guide d'onde 7 du deuxième composant optique 6 se retrouve parfaitement aligné par rapport à l'axe optique A3 du guide d'onde 3 du premier composant optique défini dans la structure SiO₂/Si.

Un procédé de fabrication de la structure SiO₂/Si, illustré sur les figures 9A à 9D, consiste dans un premier temps à empiler, sur toute la surface du substrat en silicium 1 (figure 9A), deux premières couches de silice 2, 3 (figure 9B). Dans un deuxième temps, la deuxième couche de silice 3 est gravée afin de former simultanément le ruban actif, ou guide d'onde 3, et la surface de contact 8 comprenant le plan d'appui vertical 8a et le plan d'appui latéral 8b (figure 9C). La surface de contact 8 de la structure SiO₂/Si est donc réalisée dans le même matériau que le guide d'onde 3, mais elle a une vocation de plan d'appui mécanique et non une vocation optique. Cette gravure est réalisée en utilisant un seul masque, par la méthode bien connue d'auto-alignement. Ainsi, la position latérale de la surface de contact, selon l'axe y, est parfaitement définie par rapport à la position de l'axe optique du guide d'onde 3. Cette surface de contact 8 est en outre protégée par une couche d'arrêt 21. Une couche de gaine 4 est ensuite déposée pour enterrer le guide d'onde (figure 9D). Enfin, une dernière étape, non représentée consiste ensuite à graver la couche de gaine 4 et les couches de silice 2, 3 afin de former la tranchée dans la structure SiO₂/Si. Dans ce cas, la surface de contact 8 ayant été au préalable protégée par la couche d'arrêt 21, elle n'est pas gravée avec la tranchée.

Il en va de même pour le deuxième composant optique 6 pour lequel la surface de contact 9 est réalisée par gravure en même temps que le guide d'onde 7.

Grâce au procédé d'assemblage selon l'invention, il est possible de changer la structure utile d'un composant optique sans pour autant perturber la qualité de l'alignement des guides d'onde. Par conséquent, on peut tout aussi bien aligner le guide d'onde 3 du composant optique 30 intégré dans la structure SiO₂/Si avec le guide d'onde d'un laser, ou d'un amplificateur, ou d'un photodétecteur, ou de tout autre composant optique sans avoir à modifier et à adapter la structure support SiO₂/Si en fonction des composants optiques à insérer. Le procédé d'assemblage selon l'invention est en effet indépendant à la fois de la position des guides d'onde dans les composants optiques et aussi de la taille de ces guides d'onde. Par conséquent, le procédé d'assemblage selon l'invention permet d'aligner, en cascade ou en parallèle, plusieurs composants optiques de nature différente sur une même structure support.

Les figures 10A et 10B schématisent un module optique sur une structure support SiO₂/Si selon un autre mode de réalisation. Dans ce cas, le module comporte en outre une couche de compensation 20. La surface de contact de la structure SiO₂/Si comporte un plan d'appui latéral 8b sur lequel le plan d'appui latéral 9b du deuxième composant optique vient s'appuyer. Au moins une butée est définie sur le premier composant optique 30. Cette butée est munie de parois horizontale et verticale qui constituent respectivement le plan d'appui vertical 8a et le plan d'appui latéral 8b de la surface de contact 8. La paroi verticale de la butée définie dans la structure SiO₂/Si présente une certaine hauteur h2 au dessus de la paroi horizontale. Cette hauteur h2 doit nécessairement avoir une valeur minimale pour permettre au deuxième composant optique 6 de s'appuyer correctement et éviter qu'il se déboîte. Or, étant donné que la paroi horizontale se situe à mi-hauteur de l'épaisseur du guide d'onde 3, et que la butée est obtenue dans la même couche de silice que celle ayant servi à définir le guide 3, la hauteur h2 de la paroi verticale de la butée est nécessairement égale à la moitié de l'épaisseur du guide d'onde 3.

La hauteur h2 de la paroi verticale est donc reliée à l'épaisseur du guide d'onde 3. Or, si l'épaisseur du guide d'onde 3 est faible, par exemple de l'ordre de 6*µ*m, la hauteur h2 de la paroi verticale de la butée n'est que de 3*µ*m et peut s'avérer insuffisante pour obtenir un appui correct du deuxième composant optique 6. Pour avoir une hauteur h'2 acceptable, l'invention propose donc de rajouter une couche de compensation 20 horizontalement, sur une partie de la butée de façon à surélever la paroi verticale.

Le procédé permettant de fabriquer le module comprenant cette couche de compensation 20 est schématisé sur les figures 11A à 11D. Il consiste, dans un premier temps, à empiler successivement sur toute la surface du substrat 1 en Si (figure 11A), deux couches de silice 2, 3 ainsi qu'une couche de compensation 20 (figure 118). La couche de compensation 20 et la deuxième couche de silice 3 sont ensuite gravées pour former simultanément le guide d'onde 3 et la butée (figure 11C). La butée est en outre protégée par une couche d'arrêt 21. La couche de compensation 20 présente avantageusement un indice optique n identique à celui de la couche de gaine 4 que l'on vient ensuite déposer pour enterrer le guide 3 (figure 11D). Par conséquent, cette couche de compensation n'a pas d'incidence optique sur le fonctionnement du guide d'onde. Une dernière étape, non représentée, consiste ensuite à définir la tranchée dans le module par gravure des couches de gaine 4, de compensation 20 et de silice 3, 2. La butée est préservée intacte lors de cette gravure, grâce à la couche d'arrêt 21 préalablement déposée et qui permet de la protéger.

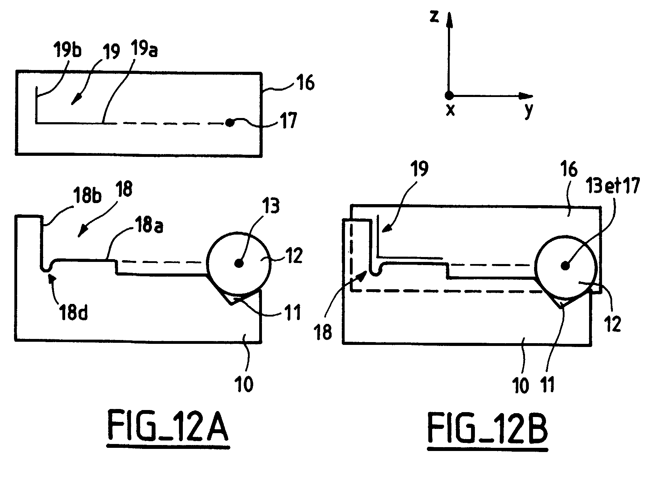

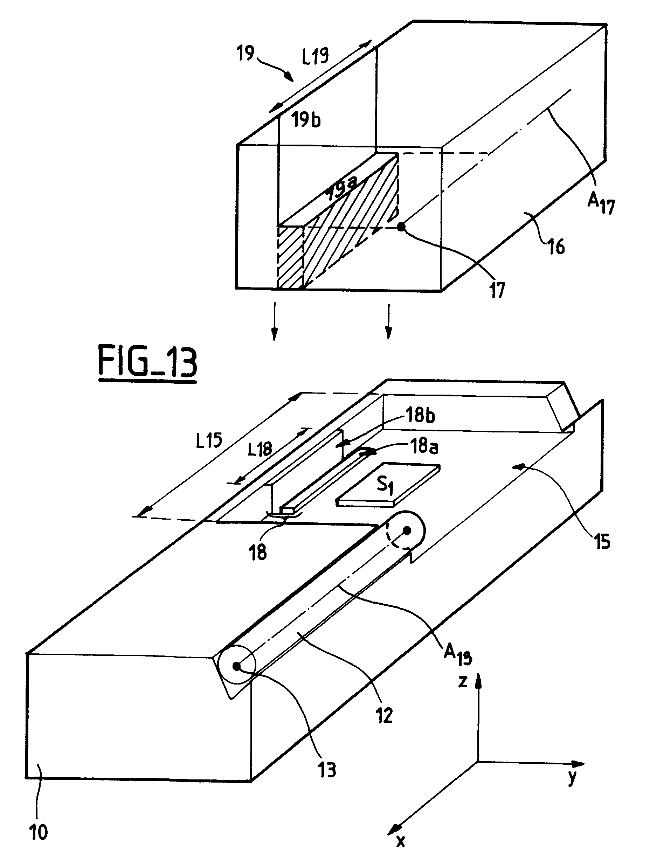

Les figures 12A et 12B schématisent la face avant de deux composants optiques respectivement séparés et assemblés dans un autre module optique auquel s'applique également l'invention. Ce module est en effet réalisé sur une structure support en Si 10 et comporte une fibre optique 12 comme premier composant optique. La figure 13 schématise ce même module en perspective et sous forme éclatée.

Dans ce cas aussi, le plan d'appui vertical 18a de la surface de contact 18 de la structure support Si est défini de telle sorte qu'il se trouve dans le même plan horizontal que l'axe optique A13 du coeur 13 de la fibre optique 12. Pour cela, la position du plan d'appui vertical 18a est définie par rapport à l'angle de la rainure en V, lequel définit la position finale de la fibre optique 12 et donc de son coeur 13.

Tout comme pour le module réalisé sur structure SiO₂/Si, le point de soudure S1, situé au fond de la tranchée 15 n'a qu'une fonction d'attache du deuxième composant optique 16.

La surface de contact 18 pratiquée sur la structure support Si est gravée en même temps que la rainure 11 en forme de V; et la surface de contact 19 pratiquée sur le deuxième composant optique 16 est gravée en même temps que le guide d'onde 17.

La hauteur du plan d'appui latéral 18b est définie pour assurer le blocage du composant optique 16. Ce même composant pourra s'hybrider indifféremment sur le substrat Si 10 ainsi gravé ou sur le substrat SiO₂/Si 1 éventuellement muni de la couche de compensation 21.

La forme des plans d'appui mécaniques réalisés sur la structure support, qu'elle soit une structure SiO₂/Si ou une structure Si, est d'autre part importante pour réaliser un alignement transversal, selon l'axe y, précis.

En effet, quand on grave le plan d'appui latéral 18b dans une structure support en Si classique, par exemple, le fond de gravure présente toujours un arrondi 18c, tel qu'illustré sur les figures 6A et 6B. La surface de contact 19 du deuxième composant optique 16 ne peut donc pas s'appuyer exactement à l'intersection des plans d'appui latéral 18b et vertical 18a, du fait de la présence de cet arrondi. Par conséquent, dans les modules optiques classiques, il se crée un jeu J, selon l'axe y, dans lequel le deuxième composant optique peut se déplacer si bien qu'un alignement transversal, selon l'axe y, ne peut pas être obtenu avec précision.

Pour éviter la présence de ce jeu selon l'axe transversal, l'invention propose donc de réaliser, sur la structure support du premier composant optique, une surface de contact 8; 18 comportant une rigole 8d; 18d. Ainsi, la rigole 8d; 18d présente toujours un fond de gravure arrondi, mais celui-ci se situe en dehors des plans d'appui vertical 8a; 18a et latéral 8b; 18b. Cette forme particulière de la surface de contact 8; 18 permet donc de positionner la surface de contact 9; 19 du deuxième composant optique 6; 16 exactement à l'intersection des plans d'appui vertical 8a; 18a et latéral 8b; 18b et d'obtenir par conséquent un alignement transversal très précis.

## Revendications

1. Procédé d'assemblage d'un module optique comprenant au moins un premier (30; 12) et un deuxième (6; 16) composant optique ayant respectivement un premier (3; 13) et un deuxième (7; 17) guide d'onde, lesdits premier et deuxième guides d'onde étant optiquement couplés l'un à l'autre, le positionnement dudit premier guide d'onde (3; 13) par rapport audit deuxième guide d'onde (7; 17) utilisant une première (8; 18) et une deuxième (9; 19) surface de contact prévues respectivement sur le premier (30; 12) et le deuxième (6; 16) composant optique, ladite première surface de contact (8; 18) coopérant avec ladite deuxième surface de contact (9; 19), caractérisé en ce que ladite première surface de contact (8; 18) comporte un plan d'appui vertical (8a; 18a) placé dans le même plan horizontal que l'axe optique (A3; A13) dudit premier guide d'onde (3; 13), et en ce que ladite deuxième surface de contact (9; 19) comporte un plan d'appui vertical (9a; 19a) placé dans le même plan horizontal que l'axe optique (A7; A17) dudit deuxième guide d'onde (7; 17).

2. Procédé d'assemblage selon la revendication 1, caractérisé en ce qu'on forme sur ledit premier composant optique (30) au moins une butée munie de parois horizontale et verticale qui constituent respectivement ledit plan d'appui vertical (8a) et un plan d'appui latéral (8b) et en ce qu'une couche de compensation (20) est disposée horizontalement sur une partie de ladite butée de façon à surélever ladite paroi verticale.

3. Module optique obtenu par le procédé d'assemblage selon la revendication 1 ou 2, caractérisé en ce que le premier composant optique (30) est intégré dans une structure support silice sur silicium.

4. Module optique obtenu par le procédé d'assemblage selon la revendication 1, caractérisé en ce que le premier composant optique est une fibre optique (12) disposée sur une structure support en silicium.

5. Module optique selon la revendication 3 ou 4, caractérisé en ce que la surface de contact (8; 18) du premier composant optique comporte une rigole (8d; 18d) présentant un fond arrondi se situant en dehors de ses plans d'appui latéral (8b; 18b) et vertical (8a; 18a).

6. Module optique obtenu par le procédé d'assemblage selon la revendication 1 ou 2, caractérisé en ce qu'il comporte en outre au moins un autre composant optique de nature différente, optiquement couplé, en cascade ou en parallèle, au deuxième et/ou au premier composant optique.
